# EUROPÄISCHE PATENTSCHRIFT

(11) **EP 0 825 219 B1**
(45) Veröffentlichungstag und Bekanntmachung des Hinweises auf die Patenterteilung: **05.12.2001**
(21) Anmeldenummer: 97113523.1
(22) Anmeldetag: 06.08.1997
(51) Int. Cl.: C08G 61/12, C09D 5/24

(54) **Kratzfeste leitfähige Beschichtungen**
Scratch-resistant conductive coatings
Revêments conducteurs résistant à l'abrasion

(30) Priorität: 19.08.1996 DE 19633311
(43) Veröffentlichungstag der Anmeldung: 25.02.1998
(73) Patentinhaber: BAYER AG, 51368 Leverkusen (DE)
(72) Erfinder: Jonas, Friedrich. Dr., 52066 Aachen (DE); Lerch, Klaus, Dr., 47800 Krefeld (DE); Guntermann, Udo, 47798 Krefeld (DE)

(56) Entgegenhaltungen:
- EP-A- 0 440 957
- EP-A- 0 805 474
- DE-A- 4 229 192

## Beschreibung

Formteile aus Glas und aus Kunststoff werden durch Reibung oder Aufbringen von Ladungen (z.B. Elektronenstrahlung in Fernsehbildröhren) elektrostatisch aufgeladen. Diese Ladungen ziehen Staubteilchen an, so daß die Formteile schnell einstauben. Man muß daher diese Formteile gegen elektrostatische Aufladung schützen. Dies ist z.B. mit einer antistatischen Beschichtung mit Oberflächenwiderstand <10¹⁰ Ω/□ erreichbar. Ist der Oberflächenwiderstand der Beschichtungen <1 000 Ω/□, dann kommt zu der antistatischen Wirkung auch noch eine abschirmende Wirkung gegen elektromagnetische/elektrostatische Strahlung hinzu.

Für den praktischen Einsatz müssen diese Beschichtungen auch eine genügende mechanische Festigkeit und Haftung aufweisen. Insbesondere bei Glas als Träger. müssen die Schichten ausreichend kratzfest sein, um bei Reinigung der beschichteten Oberflächen eine Verletzung der Beschichtung und damit den Verlust der antistatischen bzw. leitfähigen Wirkung zu vermeiden.

Aus der Literatur sind elektrisch leitfähige Polymere z.B. Polythiophene zur Herstellung antistatischer bzw. leitfähiger Beschichtungen bekannt.

Aus EP-A 440 957 und DE-OS 4 211 459 ist bekannt, Zubereitungen von Polythiophenen, die ein Polythiophensalz Polythiophen⁺ An⁻ enthalten, worin das Polythiophen positiv geladene und ungeladene wiederkehrende Einheiten der Formel (I) 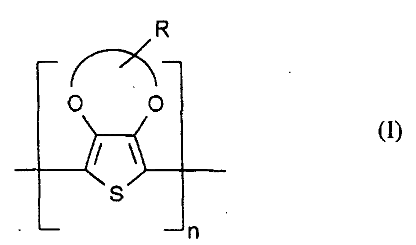 enthält, worin
- n: für eine ganze Zahl von 5 bis 100 und
- R: für H, einen gegebenenfalls substituierten Alkylrest mit 1 bis 20 C-Atomen, -CH₂-OH oder einen Arylrest mit 6 bis 14 C-Atomen stehen und
- An⁻: ein Polyanion bedeutet,
zur Herstellung leitfähiger bzw. antistatischer Beschichtungen einzusetzen.

Der Einsatz dieser Polythiophensalze zur antistatischen Ausrüstung von Glas ist in der DE-OS 4 229 192 beschrieben.

Es hat sich aber gezeigt, daß diese Beschichtungen für einige Anwendungen in der Praxis nicht ausreichend kratzfest genug sind. Es bestand somit die Aufgabe, die Beschichtungen der Polythiophene so zu verändern, daß eine unter Praxisbedingungen ausreichende Kratzfestigkeit erzielt wird.

In DE-A 19 524 132 wird vorgeschlagen, den Polythiophensalzzubereitungen zur. Verbesserung der Kratzfestigkeit durch ionisierende Strahlung härtende Bindemittel zuzusetzen. Aber auch diese Kombinationen sind für praktische Anwendungen der leitfähigen Beschichtungen z.B. als antistatische Ausrüstung von Kathodenstrahlröhren für Fernseher oder Monitore nicht kratzfest genug.

Weiterhin sind aus der EP-A 17 187 kratzfeste Beschichtungen auf Basis hydrolysierter Siloxane bekannt. Es hat sich aber gezeigt, daß diese nicht mit den Zubereitungen der leitfähigen Polythiophensalze verträglich sind.

Es wurde gefunden, daß Kombinationen aus teilweise hydrolysierten Siloxanen und den obengenannten leitfähigen Polythiophenzubereitungen zu kratzfesten Beschichtungen verarbeitet werden können, wenn die Siloxanverbindungen in Gegenwart der Polythiophenzubereitung und anorganischer oder organischer Säuren hydrolysiert werden.

Die Erfindung betrifft daher eine haftfeste, kratzfeste, elektrisch leitfähige bzw. antistatische Beschichtung für elektrisch nichtleitende Formteile aus Glas oder Kunststoff auf Basis der obengenannten Polythiophenzubereitungen und teilweise hydrolysierten Siloxanen gemäß Anspruch 1.

Als Siloxane werden Tetraalkoxysilane eingesetzt.

Die zu hydrolysierenden Tetraalkoxysilane entsprechen der allgemeinen Formel (III)

Si(R"O)₄ (III)

worin
- R": eine Alkylgruppe mit 1 bis 4 Kohlenstoffatomen bedeutet.

Die erfindungsgemäßen Zubereitungen enthalten, bezogen auf den Trockenrückstand des teilweise hydrolysierten Siloxans 0,1 bis 200 %, bevorzugt 1 bis 50 %, leitfähiges Polythiophensalz.

Bevorzugt wird als leitfähiges Polythiophensalz 3,4-Polyethylendioxythiophen/Polystyrolsulfonat verwendet.

Den erfindungsgemäßen Zubereitungen können Füllstoffe z.B. Siliciumdioxid, Titandioxid, Zinkoxid zugesetzt werden. Bevorzugt werden zur Herstellung transparenter Beschichtungen Füllstoffe mit Teilchengrößen <0,5 µm z.B. kolloidales Siliciumdioxid verwendet.

Die erfindungsgemäßen Zubereitungen können die Haftung auf dem jeweiligen Substrat verbessernde Zusätze enthalten. Für die Anwendung auf Glas haben sich z.B. Epoxysilane wie 3-Glycidoxypropyltrimethoxysilan bewährt.

Für die Anwendung auf Kunststoffen sind z.B. blockierte Isocyanate oder veretherte Methylolmelamine, wie sie in EP-A 17 187 verwendet werden, geeignet.

Den erfindungsgemäßen Lösungen können wassermischbare Lösungsmittel z.B. Alkohole wie Methanol, Ethanol, Propanol, Isopropanol, Glykole, Ketone wie Aceton, Methylethylketon, Amide wie NN-Dimethylformamid, NN-Dimethylacetamid, N-Methylpyrrolidon zugesetzt werden.

Die erfindungsgemäßen Zubereitungen können durch Zugabe der einzelnen Komponenten zu der Polythiophenzubereitung unter Rühren hergestellt werden. Zur Hydrolyse der Siloxane werden die Zubereitungen bei Temperaturen von 0°C bis 100°C, bevorzugt 20°C bis 50°C gerührt. Im allgemeinen sind Zeiten von wenigen Minuten bis zu einigen Stunden erforderlich.

Die erfindungsgemäßen Zubereitungen können nach bekannten Techniken z.B. durch Druckverfahren wie Tiefdruck, Flexodruck, Siebdruck oder durch Aufrakeln oder mit Walzenantragsystemen oder durch Vorhanggießen oder durch Sprühen oder Spincoaten aufgebracht werden.

Die aufgetragenen Schichten können bei 20°C bis 300°C, bevorzugt bei 40°C bis 200°C, getrocknet werden.

Die Schichtdicke der Beschichtung liegt je nach gewünschtem Oberflächenwiderstand nach Abdampfen der Lösungsmittel bei 0,05 bis 100 µm, bevorzugt bei 0,05 bis 30 µm.

Die einstellbaren Oberflächenwiderstände der Beschichtungen liegen zwischen 10¹⁰ und 0,1 Ω/□, bevorzugt 10⁸ und 100 Ω/□.

Zur Erzielung niedriger Oberflächenwiderstände < 400 Ω/□ können den erfindungsgemäßen Zubereitungen Di- oder Polyhydroxy- und/oder Carbonsäuren oder Amid- bzw. Lactamgruppen enthaltende Verbindungen wie Sorbit zugesetzt werden, wie in EP-A 686 662 beschrieben.

Den erfindungsgemäßen Zubereitungen werden organische oder anorganische Säuren zur Beschleunigung der Hydrolyse der Siloxanverbindungen zugesetzt.

Geeignete anorganische Säuren sind z.B. Salzsäure, Schwefelsäure, Flußsäure, Salpetersäure.

Geeignete organische Säuren sind z.B. aliphatische oder aromatische Carbonsäuren z.B. Essigsäure, Propionsäure, Benzoesäure, aliphatische oder aromatische Sulfonsäuren z.B. Methansulfonsäure, Toluolsulfonsäure.

Bezogen auf hydrolysierbare Siloxanverbindung können bis 20 Gew.-% Säure zugesetzt werden.

Als Substrate, die nach dem erfindungsgemäßen Verfahren kratzfest und leitfähig beschichtet werden können, seien genannt: Formkörper und Folien aus Kunststoffen z.B. Polyolefinen wie Polyethylen, Polypropylen, Polyestern wie Polyethylenterephthalat, Polyethylennaphthalat, Polystyrol, Polycarbonat, ABS, Polyacrylaten, Polyacrylnitril, Cellulosederivaten wie Celluloseacetat, Polyamiden, Polyvinylchlorid, gegebenenfalls. glasfaserverstärkte Epoxidharzkunststoffe oder deren Copolymere bzw. Blends. Besonders geeignet sind die erfindungsgemäßen Zubereitungen zur kratzfesten antistatischen Ausrüstung von anorganischen Formkörpern z.B. aus Glas oder Keramik wie Aluminiumoxidkeramik oder Siliciumnitridkeramik. Bevorzugt werden die erfindungsgemäßen Zubereitungen zur antistatischen bzw. leitfähigen Beschichtung von Kathodenstrahlröhren aus Glas eingesetzt.

Die erfindungsgemäßen Beschichtungen zeichnen sich durch hohe Transparenz und Kratzfestigkeit aus. Die beschichteten Formkörper weisen deutlich geringere Staubanziehung auf. Weiterhin sind die erfindungsgemäß beschichteten Kunststoffe oder Gläser geeignet zur Abschirmung elektromagnetischer Strahlung z.B. aus Fernsehbildröhren.

### Vergleichsbeispiel

10 g einer 3,4-Polyethylendioxythiophen/Polystyrolsulfonatlösung (BAYTRON P der Bayer AG Leverkusen) mit einem Feststoffgehalt von 1,3 Gew.-% werden unter Rühren mit 5,4 g einer teilweise hydrolysierten Siloxanlösung auf Basis Tetraethoxysilan und Methyltriethoxysilan entsprechend Beispiel c2 der EP 17 187 versetzt. Hierbei bilden sich in der Lösung feste Teilchen, d.h. die Lösung kann nicht mehr zu klaren transparenten Schichten verarbeitet werden.

### Beispiel 1

35,4 g einer 3,4-Polyethylendioxythiophen/Polystyrolsulfonatlösung (BAYTRON P der Bayer AG Leverkusen) mit einem Feststoffgehalt von 1,3 Gew.-% werden unter Rühren mit
4,4 g Tetraethoxysilan
3,5 g Methyltrimethoxysilan
35,4 g Isopropanol
14,1 g entionisiertem Wasser
und 7,1 g 0,1 molarer Salzsäure versetzt und anschließend 6 Stunden gerührt. Man erhält eine klare Lösung, die nach Filtration über ein 5 µm Textilgewebe direkt zur Beschichtung von Glas eingesetzt werden kann.

### Beispiel 2

34,5 g einer 3,4-Polyethylendioxythiophen/Polystyrolsulfonatlösung (BAYTRON P der Bayer AG Leverkusen) mit einem Feststoffgehalt von 1,3 Gew.-% werden unter Rühren mit
5,2 g Tetraethoxysilan
3,5 g Methyltrimethoxysilan
35,0 g Isopropanol
13,8 g entionisiertem Wasser
und 8,7 g 0,1 molarer Salzsäure versetzt und anschließend 6 Stunden gerührt. Man erhält eine klare Lösung, die nach Filtration über ein 5 µm Textilgewebe direkt zur Beschichtung von Glas eingesetzt werden kann.

### Beispiel 3 (Vergleich)

19,25 g einer 3,4-Polyethylendioxythiophen/Polystyrolsulfonatlösung (BAYTRON P der Bayer AG Leverkusen) mit einem Feststoffgehalt von 1,3 Gew.-% werden unter Rühren mit
1,0 g Tetraethoxysilan
10,0 g Isopropanol
19,5 g entionisiertem Wasser
und 0,25 g 3-Glycidoxypropytrimethoxysilan versetzt und anschließend 1,5 Stunden gerührt. Man erhält eine klare Lösung, die direkt zur Beschichtung von Glas eingesetzt werden kann.

### Beispiel 4 (Vergleich)

38,5 g einer 3,4-Polyethylendioxythiophen/Polystyrolsulfonatlösung (BAYTRON P der Bayer AG Leverkusen) mit einem Feststoffgehalt von 1,3 Gew.-% werden unter Rühren mit
1,0 g Tetraethoxysilan
10,0 g Isopropanol
und 0,5 g 3-Glycidoxypropytrimethoxysilan versetzt und anschließend 1,5 Stunden gerührt. Man erhält eine klare Lösung, die direkt zur Beschichtung von Glas eingesetzt werden kann.

### Beispiel 5 (Vergleich)

42,9 g einer 3,4-Polyethylendioxythiophen/Polystyrolsulfonatlösung (BAYTRON P der Bayer AG Leverkusen) mit einem Feststoffgehalt von 1,3 Gew.-% werden unter Rühren mit
4,7 g N-Methylpyrrolidon
0,9 g 3-Glycidoxypropyltrimethoxysilan und
53,6 g Isopropanol versetzt und anschließend 30 Minuten bei Raumtemperatur gerührt. Man erhält eine klare Lösung, die direkt zur Beschichtung von Glas eingesetzt werden kann.

### Verwendungsbeispiele

Der Oberflächenwiderstand wurde nach DIN IEC 93 bestimmt, die Bleistifthärte nach ASTM D 3363-92a, der Glanz nach ASTM D 523.
1) Die Lösung nach Beispiel 3 (Vergleich) wird mit einer Lackschleuder bei 750 U/min auf eine 10 x 10 cm² große Glasplatte aufgeschleudert und anschließend mit Warmluft von 50°C getrocknet. Nach 24 Stunden bei Raumtemperatur wurde der Oberflächenwiderstand mittels aufgemalten Leitsilberelektroden und die Kratzfestigkeit bestimmt.
   Oberflächenwiderstand 3 x 10⁵ Ω/□
   Bleistifthärte > 4 H
2) Die Lösung nach Beispiel 4 (Vergleich) wird mit einer Lackschleuder bei 750 U/min auf eine 10 x 10 cm² große Glasplatte aufgeschleudert und anschließend mit Warmluft von 50°C getrocknet. Nach 24 Stunden bei Raumtemperatur wurde der Oberflächenwiderstand mittels aufgemalten Leitsilberelektroden und die Kratzfestigkeit bestimmt.
   Oberflächenwiderstand 5 x 10⁶ Ω/□
   Bleistifthärte 6 H
3) Die Lösung nach Beispiel 1 wird mit einer Druckluftsprühpistole auf eine 30 x 30 cm² große Glasplatte aufgesprüht und anschließend 30 Minuten bei 170°C getrocknet. Die Auftragsstärke nach dem Trocknen beträgt 1 500 mg/m². Nach 24 Stunden bei Raumtemperatur wurde der Oberflächenwiderstand mittels aufgemalten Leitsilberelektroden und die Kratzfestigkeit bestimmt.
   Oberflächenwiderstand 1 x 10⁵ Ω/□
   Bleistifthärte 9 H
4) Die Lösung nach Beispiel 2 wird mit einer Druckluftsprühpistole auf eine 30 x 30 cm² große Glasplatte aufgesprüht und anschließend getrocknet. Die Auftragsstärke nach dem Trocknen beträgt 1 600 mg/m². Nach 24 Stunden bei Raumtemperatur wurde der Oberflächenwiderstand mittels aufgemalten Leitsilberelektroden und die Kratzfestigkeit bestimmt.
   Oberflächenwiderstand 2 x 10⁵ Ω/□
   Bleistifthärte > 8 H
5) Die Lösung nach Beispiel 5 (Vergleich) wird mit einer Druckluftsprühpistole auf eine 30 x 30 cm² große Glasplatte aufgesprüht und dann 5 Minuten bei 80°C getrocknet. Anschließend wird eine Lösung nach Beispiel 1 mit 2,1 g N-Methylpyrrolidon versetzt und als 2. Schicht aufgesprüht. Nach dem Abdunsten der Lösungsmittel bei Raumtemperatur wird 30 Minuten bei 170°C eingebrannt. Die Auftragsmenge beträgt 1,4 g/m² trocken. Nach 24 Stunden wurde der Oberflächenwiderstand mit aufgemalten Leitsilberelektroden und die Kratzfestigkeit bestimmt.
   Oberflächenwiderstand 4 x 10³ Ω/□
   Bleistifthärte 9H
6) Die Lösung nach Beispiel 5 (Vergleich) wird mit einer Druckluftsprühpistole auf eine auf 80°C vorgeheizte 30 x 30 cm² große Glasplatte aufgesprüht und dann 5 Minuten bei 80°C getrocknet. Anschließend wird eine Lösung nach Beispiel 1 mit 1,3 g Glycerin versetzt und als 2. Schicht aufgesprüht. Nach dem Abdunsten der Lösungsmittel bei Raumtemperatur wird 30 Minuten bei 170°C eingebrannt. Die Auftragsmenge beträgt 1,5 g/m² trocken. Nach 24 Stunden wurde der Oberflächenwiderstand mit aufgemalten Leitsilberelektroden, der Glanz und die Kratzfestigkeit bestimmt.
   Oberflächenwiderstand 2 x 10³ Ω/□
   Bleistifthärte 9H
   Glanz 60° 77 %
7) Die Lösung nach Beispiel 1 wird mit 2,1 g N-Methylpyrrolidon verdünnt und dann mit einer Druckluftsprühpistole auf eine auf 80°C vorgeheizte 30 x 30 cm² große Glasplatte aufgesprüht. Nach dem Abdunsten der Lösungsmittel bei Raumtemperatur wird 30 Minuten bei 170°C eingebrannt. Die Auftragsmenge beträgt 1,2 g/m² trocken. Nach 24 Stunden wurde der Oberflächenwiderstand mit aufgemalten Leitsilberelektroden, der Glanz und die Kratzfestigkeit bestimmt.
   Oberflächenwiderstand 2 x 10⁵ Ω/□
   Bleistifthärte 9H
   Glanz 60° 60 %

## Patentansprüche

1. Zubereitungen aus elektrisch leitfähigen Polythiophensalzen Polythiophen⁺ An⁻, worin das Polythiophen positiv geladene und ungeladene wiederkehrende Einheiten der Formel (I), 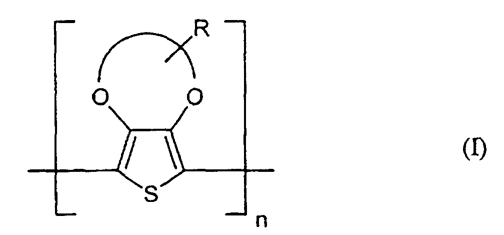 enthält, worin
n für eine ganze Zahl von 5 bis 100 und
R für H, einen gegebenenfalls substituierten Alkylrest mit 1 bis 20 C-Atomen, -CH₂-OH oder einen Arylrest mit 6 bis 14 C-Atomen stehen und
An- ein Polyanion bedeutet,
und teilweise hydrolysierten Tetraalkoxysilanen, die in Gegenwart der leitfähigen Polythiophensalze und anorganischer oder organischer Säuren hydrolysiert worden sind.

2. Zubereitung nach Anspruch 1, worin als leitfähiges Polythiophensalz 3,4-Polyethylendioxythiophen verwendet wird.

3. Zubereitung nach Anspruch 1, worin ein Tetraalkoysilan der Formel (III)
Si(R"O)₄ (III)
worin
R" eine Alkylgruppe mit 1 bis 4 Kohlenstoffatomen bedeutet, verwendet wird.

4. Zubereitung nach Anspruch 1, **dadurch gekennzeichnet, daß** sie zusätzlich ein Alkyltrialkoxysilan enthält.

5. Zubereitung nach Anspruch 4, **dadurch gekennzeichnet, daß** das Alkyltrialkoxysilan ein Methyltrialkoxysilan ist.

6. Verwendung der Zubereitungen nach Anspruch 1 zur Herstellung kratzfester, elektrisch leitfähiger oder antistatischer Beschichtungen.

7. Verwendung der Zubereitungen nach Anspruch 1 zur Herstellung kratzfester, elektrisch leitfähiger oder antistatischer Beschichtungen auf Kathodenstrahköhren.

## Claims

1. Preparations comprising electrically conductive polythiophene salts polythiophene⁺ An⁻, the polythiophene comprising positively charged and uncharged recurring units having the formula (I) 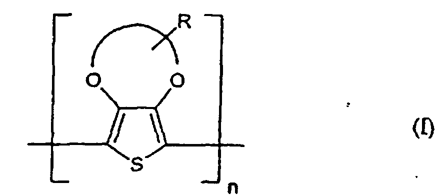 where
n is an integer from 5 to 100, and
R represents hydrogen, an optionally substituted alkyl radical having 1 to 20 carbon atoms, -CH₂-OH, or an aryl radical having 6 to 14 carbon atoms, and
An⁻ is a polyanion,
and partially hydrolysed tetraalkoxysilanes which have been hydrolysed in the presence of the conductive polythiophene salts and inorganic or organic acids.

2. Preparation according to Claim 1, wherein the conductive polythiophene salt used is 3,4-polyethylene dioxythiophene.

3. Preparation according to Claim 1, wherein a tetraalkoxysilane having the formula (III):
(Si) (R"O)₄ (III),
where
R" is an alkyl group having 1 to 4 carbon atoms, is used.

4. Preparation according to Claim 1, **characterized in that** it additionally comprises an alkyltrialkoxysilane.

5. Preparation according to Claim 4, **characterized in that** the alkyltrialkoxysilane is a methyltrialkoxysilane.

6. Use of the preparations according to Claim 1 for making scratch-resistant, electrically conductive or anti-static coatings.

7. Use of the preparations according to Claim 1 for making scratch-resistant, electrically conductive or anti-static coatings on cathode ray tubes.

## Revendications

1. Compositions consistant en sels de polythiophène, polythiophène⁺An⁻, conducteurs de l'électricité dont le polythiophène contient des motifs répétés chargés positivement et non chargés de formule (I), 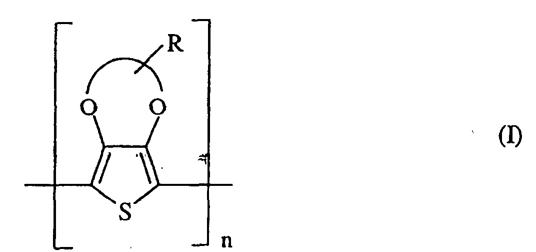 dans laquelle
n est un nombre entier allant de 5 à 100 et
R représente H, un groupe alkyle en C₁-C₂₀ éventuellement substitué, un groupe -CH₂-OH ou un groupe aryle en C₆-C₁₄ et
An⁻ représente un polyanion,
et des tétraalcoxysilanes partiellement hydrolysés, qui ont été hydrolysés en présence des sels de polythiophène conducteurs et d'acides minéraux ou organiques.

2. Composition selon la revendication 1, pour laquelle on utilise en tant que sel de polythiophène conducteur un 3,4-polyéthylènedioxythiophène.

3. Composition selon la revendication 1, pour laquelle on utilise un tétraalcoxysilane de formule (III)
Si(R"O)₄ (III)
dans laquelle
R" représente un groupe alkyle en C₁-C₄.

4. Composition selon la revendication 1, **caractérisée en ce qu'**elle contient en outre un alkyltrialcoxysilane.

5. Composition selon la revendication 4, **caractérisée en ce que** l'alkyltrialcoxysilane est un méthyltrialcoxysilane.

6. Utilisation des compositions selon la revendication 1 pour l'application de revêtements conducteurs de l'électricités ou antistatiques résistant à l'éraflage.

7. Utilisation des compositions selon la revendication 1 pour l'application de revêtements conducteurs de l'électricité ou antistatiques résistant à l'éraflage sur des tubes luminescents cathodiques.
